# EUROPEAN PATENT SPECIFICATION

(11) **EP 3 025 890 B1**
(45) Date of publication and mention of the grant of the patent: **28.02.2018**
(21) Application number: 14195058.4
(22) Date of filing: 27.11.2014
(51) Int. Cl.: B60K 11/02, B60L 11/18, H01M 10/625, H01M 10/6568, H01M 10/66, H01M 10/613, B60K 1/04, B60K 1/00

(54) **Cooling system and method**
Kühlsystem und -verfahren
Système et procédé de refroidissement

(43) Date of publication of application: 01.06.2016
(73) Proprietor: Sandvik Mining and Construction Oy, 33330 Tampere (FI)
(72) Inventor: Lindholm, Kari, 33330 Tampere (FI)

(56) References cited:
- EP-A2- 0 889 001
- WO-A1-02/054520
- WO-A2-2011/088968

## Description

### Background

The invention relates to a battery cooling system of an electric mining machine.

The invention further relates to an electric mining machine.

Additionally, the invention relates to a method for cooling a battery of an electric mining machine.

A battery for storing electrical energy should be operated in a temperature range that supports a long lifetime of the battery. When a battery is charged electrical energy is stored to the battery for later use. When the energy stored to the battery is used to supply power to an appliance, e.g. an electrical motor, the battery is discharged. This is shown e.g. in WO 2011/088968 A1 (generic document of claim 1). A typical operating temperature for a lithium-ion battery is between 0-45 °C. If the temperature exceeds 45 °C, the battery may be degraded. When the temperature of the battery is higher than 45 °C, electrolyte inside the battery starts to degrade, which may cause pressure inside battery cells. The pressure may accumulate inside the battery and it may be discharged from the battery along with the electrolyte, whereby personnel and equipment nearby the battery may be in danger.

Therefore, there is a demand for systems and methods for cooling batteries.

### Brief description

Viewed from a first aspect, there can be provided battery cooling system of an electric mining machine, comprising: fluid lines arranged to communicate with a battery to be cooled for transferring heat energy from said battery to coolant within said fluid lines, a coolant cartridge receiver, a coolant cartridge having a capacity for receiving and storing heat energy, the coolant cartridge being removably arrangeable in said coolant cartridge receiver, wherein said fluid lines are connected to said coolant cartridge receiver for transferring heat energy from the coolant within the fluid lines to the coolant cartridge arranged in the coolant cartridge receiver.

Thereby a simple cooling system may be achieved.

Viewed from a further aspect, there can be provided an electric mining machine comprising: at least one battery for operating the mining machine, and a battery cooling system according to claim 1 for cooling said at least one battery.

Thereby a simple and small sized structure of cooling may be achieved.

Viewed from a further aspect, there can be provided a method for cooling a battery of an electric mining machine, comprising: cooling a coolant cartridge, arranging the cooled coolant cartridge in a coolant cartridge receiver, transferring heat energy created by the function of the battery to the coolant cartridge over said coolant cartridge receiver, thus storing said heat energy in the coolant cartridge by adding heat energy contained therein, and removing the coolant cartridge and heat energy stored therein from the coolant cartridge receiver.

Thereby a low cost method for cooling the battery may be achieved.

In one embodiment the coolant cartridge comprises a room arranged to contain receiving material for receiving heat energy from the coolant within the fluid lines. An advantage is that a cheap and/or high capacity liquid material, e.g. water can be used.

In one embodiment the capacity of the coolant cartridge for receiving heat energy is at least partly based on phase transition of said receiving material. An advantage is that the capacity for receiving heat energy may be very high.

In one embodiment the receiving material comprises salt. An advantage is that the capacity for receiving heat energy may be very high.

In one embodiment the coolant cartridge comprises receiving material in solid state. An advantage is that there cannot be leaking problems.

In one embodiment the coolant cartridge has a capacity of storing at least 4 kWh of heat energy. An advantage is that such capacity is usually enough for cooling the battery for a single charging interval.

In one embodiment a refrigeration arrangement is arranged in a battery charging station of the battery. An advantage is that it is easy and quick to handle the coolant cartridge while the battery is being charged.

### Brief description of figures

Some embodiments illustrating the present disclosure are described in more detail in the attached drawings, in which
Figure 1 is a schematic side view of an example battery cooling system in partial cross-section,
Figure 2 is a schematic side view of an example coolant cartridge in partial cross-section, and
Figure 3 is a schematic view of an electric mining machine and a refrigeration arrangement.

In the figures, some embodiments are shown simplified for the sake of clarity. Similar parts are marked with the same reference numbers in the figures.

### Detailed description

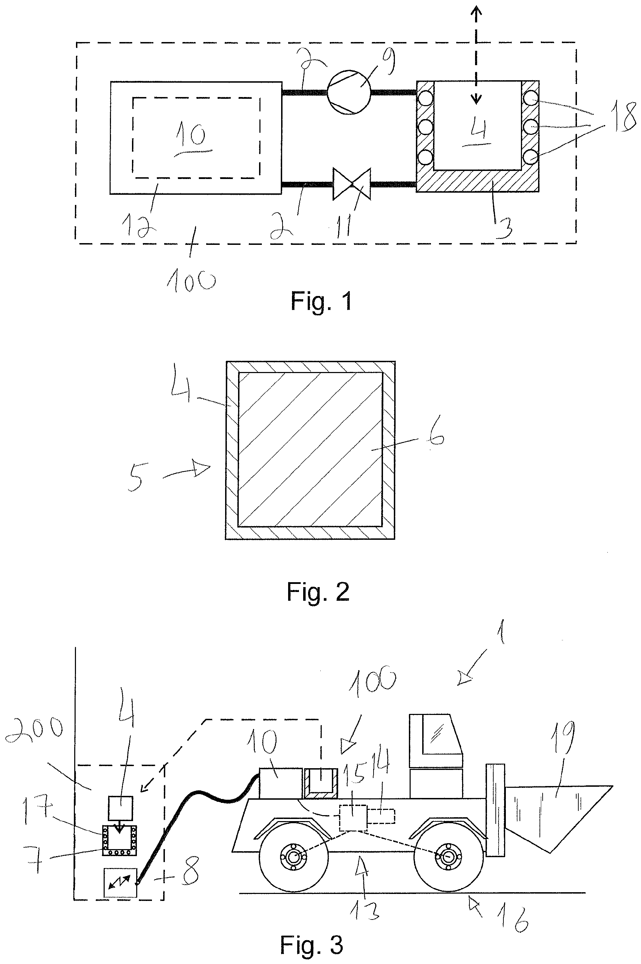

Figure 1 is a schematic side view of an example battery cooling system in partial cross-section, and Figure 2 is a schematic side view of an example coolant cartridge in partial cross-section.

The battery cooling system 100 comprises fluid lines 2 that are arranged to communicate with a battery 10 to be cooled. It is to be noted that the battery 10 is depicted by dashed lines in Figure 1. Furthermore, it is to be noted that the battery 10 may comprise one or more batteries that can be coupled in series or in parallel.

The fluid lines 2 are filled with coolant that receives heat energy generated in the battery 10. The heat energy is transferred by said coolant to a coolant cartridge receiver 3.

Said coolant may be e.g. water or water-alcohol mixture, such as water-glycol or water-ethanol mixture, salt water, liquid salt, oil or other heat transfer fluid.

The battery cooling system 100 may comprise a battery cooler 12 positioned in contact with the battery such that heat energy may be conducted from the battery 10 to battery cooler 12. The battery cooler 12 may comprise fluid channels that are connected to the fluid lines 2. In another embodiment, the fluid channels of the battery cooler 12 are not connected to the fluid lines 2 but there is a heat exchanger arranged to transfer heat energy. In still another embodiment, the battery cooler 12 does not comprise any fluid channels, but heat energy is transferred to the fluid lines 2 by solid structure of the battery cooler 12.

The fluid lines 2 are connected to the battery cooler 12 for removing the heat energy therefrom for feeding cooled coolant back in the battery cooler 12.

The coolant cartridge receiver 3 may receive a coolant cartridge 4. The coolant cartridge 4 comprises a receiving material 6 that may receive heat energy from the coolant cartridge receiver 3 and is capable to store said heat energy therein.

The coolant cartridge receiver 3 may comprise fluid channels 18 being connected to the fluid lines 2. In said fluid channels 18 there may be e.g. water or water-alcohol mixture, such as water-glycol or water-ethanol mixture, salt water, liquid salt, oil or other heat transfer fluid.

In another embodiment, the fluid channels 18 are not connected to the fluid lines 2 but there is a heat exchanger arranged to transfer heat energy between the fluid lines 2 and the fluid channels 18. In still another embodiment, the coolant cartridge receiver 3 does not comprise any fluid channels, but heat energy is transferred by the solid structure of the coolant cartridge receiver 3 from the fluid lines 2 to the coolant cartridge 4.

The coolant cartridge 4 is arranged or attached removable to the coolant cartridge receiver 3. This means that the coolant cartridge 4 can be easily removed from the receiver 3. Especially, there are no fluid line connections between the receiver 3 and the coolant cartridge 4.

The battery cooling system 100 may comprise means for controlling the cooling operation, such as one or more pumps 9 for circulating the coolant, and valves 11 for controlling the flow of the coolant, etc.

As shown in Figure 2, the coolant cartridge 4 may comprise a room 5 and receiving material 6 arranged therein. The receiving material 6 has capability for receiving heat energy from the coolant running within the fluid lines 2. According to an idea, the receiving material 6 comprises liquid, e.g. water or oil. According to another idea, the receiving material 6 is material 6 in solid state, e.g. salt or metal.

In an embodiment, the capacity of the coolant cartridge 4 for receiving heat energy is, at least partly, based on phase transition of the receiving material 6. For example, if the receiving material 6 is water, a phase transition from solid or icy state to liquid state may take place due to the received heat energy.

Figure 3 is a schematic view of a mining machine and a refrigeration arrangement.

The mining machine 1 is a battery powered vehicle and therefore, it comprises a battery 10. The battery 10 may be capable of storing electrical energy to be supplied to one or more functions of the vehicle. The electrical energy from the battery 10 may be used to power transportation of goods and/or people by the mining machine 1. In an embodiment the battery may be lithium-ion battery.

The mining machine 1 comprises at least one battery 10 and a battery cooling system 100, the function and the construction being discussed in connection with Figures land 2 above. It is to be noted here that the mining machine may comprise multiple coolant cartridge receivers 3.

Preferably, the battery cooling system 100 has a cooling power that is sufficient to cool the battery 10 all that time the battery 10 is discharged and is supplying electrical power to power operations of the mining machine 1.

The mining machine 1 may be moved by means of drive equipment 13. The drive equipment 13 may comprise one or more drive motors 14 and one or more power transmission means 15 for transmitting drive power to one or more driving means 16, e.g. wheels.

The power transmission means 15 may comprise a mechanical gear system and mechanical power transmission members or, alternatively, a hydraulic or electric drive power system may be used.

The drive equipment 13 may be connected to the battery 10 for supplying electricity to the drive equipment 13 from the battery 10. The connection may comprise an electrically conductive cable, shown by a dashed line in the Figure 3 between the battery 10 and the drive equipment 13. Accordingly, the movement of the mining machine 1 may be powered by electricity from the battery 10. It should be appreciated that the mining machine 1 may have also other power sources in addition to the battery 10.

The battery powered mining machine 1 may be, for example, a dumper, load haul dump, loader, drilling device, rock drilling rig or any other mining vehicle. The mining vehicle 1 may be equipped with one or more mining work devices which mining work device may be one or more of the following mining work devices: rock drilling machine, bolting machine, scaling device, injection device, blasthole charger, loading device, bucket, box, measuring device, or drilling, sealing and propellant feeding equipment used in small-charge excavation. The battery powered mining machine 1 shown in Figure 3 comprises a dump 19 for production operations of the mining machine 1.

The productive operations may be driven by the drive equipment 13. Therefore, the productive operations may be powered by the battery 10.

Figure 3 is also showing a refrigeration arrangement 200 that is equipped with means for cooling the coolant cartridge 4 of the battery cooling system 100 described in this description.

The refrigeration arrangement 200 comprises a refrigeration device 7 onto or into which the coolant cartridge 4 removed from the mining machine 1 may be arranged.

The refrigeration device 7 receives heat energy from the heated coolant cartridge 4 and thus reduces the heat energy content of the coolant cartridge 4, i.e. the coolant cartridge 4 cools down. The refrigeration device 7 is basically a heat exchanger. The refrigeration device 7 may comprise refrigeration fluid channels 17 that are arranged to receive heat energy from the refrigeration device 7 and, furthermore, arranged to transfer heat energy away from the refrigeration device 7. Said heat energy may be transferred from the refrigeration fluid channels 17 e.g. into air or another liquid by a heat exchanger not shown in Figures. The refrigeration fluid channels 17 may contain e.g. water or water-alcohol mixture, such as water-glycol or water-ethanol mixture, salt water, liquid salt, oil or other heat transfer fluid.

In another embodiment, the refrigeration device 7 does not comprise any fluid channels, but heat energy is transferred by its solid structure away from the coolant cartridge receiver 3.

In those embodiments of the coolant cartridge 4 wherein the coolant cartridge 4 comprises receiving material 6 that has stored heat energy by phase transition, the reduction of the heat energy content of the coolant cartridge 4 in the refrigeration device 7 comprises a reverse phase transition of said receiving material 6.

In the embodiment shown in Figure 3, the refrigeration arrangement 200 is arranged in a battery charging station 8 meant for charging the battery 10 of the mining machine 1. Thus, the refrigeration arrangement 200 may be easily and quickly accessed when the battery 10 of the mining machine 1 is to be charged. In order to rationalize even more the use of the battery cooling system 100 and the refrigeration arrangement, the cooling capacity of the coolant cartridge 4 is chosen to be sufficient to cool the battery 10 for a single charging interval of the battery 10.

It is to be noted, however, that it is not essential to arrange the refrigeration arrangement 200 in a battery charging station 8.

The coolant cartridge 4 is kept in the refrigeration device 7 until it has reached a predetermined cooling capacity. The cooling capacity of the coolant cartridge 4 may be measured and/or monitored based on e.g. temperature measurements known *per se.* In an embodiment, said cooling capacity is at least 4 kWh. According to an idea, the operating temperature of the coolant cartridge 4 is in range between +10 to -100 °C.

According to an idea, the capacity of the refrigeration device 7 is high enough for cooling the coolant cartridge 4 in the predetermined cooling capacity when the battery 10 is recharged.

The refrigeration arrangement 200 may comprise plurality of refrigeration devices 7. Thus plurality of coolant cartridges 4 can be cooled simultaneously for use in plurality of mining machines 1. According to an idea, all of the said plurality of refrigeration devices 7 and said coolant cartridges 4 are identical. Thus any of said plurality of refrigeration devices 7 is able to receive a coolant cartridge 4 from any of said plurality of mining machines 1, and any of said coolant cartridges 4 may be arranged in any of said plurality of mining machines 1.

In summary, the battery 10 may be cooled by method that comprises steps of:
cooling the coolant cartridge 4 in the refrigeration device 7,
removing the coolant cartridge 4 from the refrigeration device 7 and arranging it in the coolant cartridge receiver 3 in the mining machine 1,
transferring heat energy created by the function of the battery 10 to the coolant cartridge 4 over said coolant cartridge receiver 3,
thus storing said heat energy in the coolant cartridge 4 by adding heat energy contained therein,
removing the heated coolant cartridge 4 and heat energy stored therein from the coolant cartridge receiver 3, and
arranging the heated coolant cartridge 4 in the refrigeration device 7 for re-cooling.

The drawings and the related description are only intended to illustrate the idea of the invention. The invention may vary in detail within the scope defined in the following claims.

### Reference symbols

- 1: mining machine (electric mining machine)
- 2: fluid line
- 3: coolant cartridge receiver
- 4: coolant cartridge
- 5: room
- 6: receiving material
- 7: refrigeration device
- 8: battery charging station
- 9: pump
- 10: battery
- 11: valve
- 12: battery cooler
- 13: drive equipment
- 14: drive motor
- 15: power transmission means
- 16: driving means
- 17: refrigeration fluid channels
- 18: fluid channel
- 19: dump

- 100: battery cooling system
- 200: refrigeration arrangement

## Claims

1. A battery cooling system (100) of an electric mining machine, comprising:
fluid lines (2) arranged to communicate with a battery (10) to be cooled for transferring heat energy from said battery (10) to coolant within said fluid lines (2),
a coolant cartridge receiver (3),
a coolant cartridge (4) having a capacity for receiving and storing heat energy,
wherein said fluid lines (2) are connected to said coolant cartridge receiver (3) for transferring heat energy from the coolant within the fluid lines (2) to the coolant cartridge (4) arranged in the coolant cartridge receiver (3), **characterized in that**, the coolant cartridge (4) is removably arrangeable in said coolant cartridge receiver (3).

2. The battery cooling system as claimed in claim 1, wherein the coolant cartridge (4) comprises a room (5) arranged to contain receiving material (6) for receiving heat energy from the coolant within the fluid lines (2).

3. The battery cooling system as claimed in claim 2, wherein the capacity of the coolant cartridge (4) for receiving heat energy is at least partly based on phase transition of said receiving material (6).

4. The battery cooling system as claimed in any of the preceding claims, wherein the receiving material (6) comprises water.

5. The battery cooling system as claimed in any of the preceding claims, wherein the receiving material (6) comprises salt.

6. The battery cooling system as claimed in claim 1 or 2, wherein the coolant cartridge (4) comprises receiving material (6) in solid state.

7. The battery cooling system as claimed in any of the preceding claims, wherein the coolant cartridge (4) has a capacity of storing at least 4 kWh of heat energy.

8. An electric mining machine (1) comprising:
at least one battery (10) for operating the mining machine (1), and
a battery cooling system (100) according to claim 1 for cooling said at least one battery (10).

9. A method for cooling a battery of an electric mining machine, comprising:
cooling a coolant cartridge (4),
arranging the cooled coolant cartridge (4) in a coolant cartridge receiver (3),
transferring heat energy created by the function of the battery (10) to the coolant cartridge (4) over said coolant cartridge receiver (3),
thus storing said heat energy in the coolant cartridge (4) by adding heat energy contained therein, and
removing the coolant cartridge (4) and heat energy stored therein from the coolant cartridge receiver (3).

10. The method for cooling a battery as claimed in claim 9, further comprising:
storing heat energy at least partly by a phase transition phenomena of a receiving material arranged in the coolant cartridge (4).

11. The method for cooling a battery as claimed in claim 9 or 10, further comprising:
arranging the coolant cartridge (4) removed from the coolant cartridge receiver (3) in a refrigeration arrangement (200) for cooling the coolant cartridge (4).

12. The method for cooling a battery as claimed in claim 11, further comprising:
reducing the heat energy content of the coolant cartridge (4) by a phase transition phenomena of a receiving material arranged in the coolant cartridge (4).

## Patentansprüche

1. Batteriekühlsystem (100) einer elektrischen Bergbaumaschine, umfassend:
Fluidleitungen (2), die angeordnet sind, mit einer zu kühlenden Batterie (10) zum Übertragen von Wärmeenergie von der Batterie (10) auf Kühlmittel innerhalb der Fluidleitungen (2) zu kommunizieren,
einen Kühlmittelkartuschenempfänger (3),
eine Kühlmittelkartusche (4) mit einer Kapazität zum Empfangen und Speichern von Wärmeenergie,
wobei die Fluidleitungen (2) mit dem Kühlmittelkartuschenempfänger (3) zum Übertragen von Wärmeenergie von dem Kühlmittel innerhalb der Fluidleitungen (2) auf die Kühlmittelkartusche (4), die in dem Kühlmittelkartuschenempfänger (3) angeordnet ist, verbunden sind, **dadurch gekennzeichnet, dass** die Kühlmittelkartusche (4) entnehmbar in dem Kühlmittelkartuschenempfänger (3) anordenbar ist.

2. Batteriekühlsystem nach Anspruch 1, wobei die Kühlmittelkartusche (4) einen Raum (5) umfasst, der angeordnet ist, Empfangsmaterial (6) zum Empfangen von Wärmeenergie von dem Kühlmittel innerhalb der Fluidleitungen (2) zu enthalten.

3. Batteriekühlsystem nach Anspruch 2, wobei die Kapazität der Kühlmittelkartusche (4) zum Empfangen von Wärmeenergie zumindest teilweise auf Phasenübergang des Empfangsmaterials (6) basiert.

4. Batteriekühlsystem nach einem der vorstehenden Ansprüche, wobei das Empfangsmaterial (6) Wasser umfasst.

5. Batteriekühlsystem nach einem der vorstehenden Ansprüche, wobei das Empfangsmaterial (6) Salz umfasst.

6. Batteriekühlsystem nach Anspruch 1 oder 2, wobei die Kühlmittelkartusche (4) Empfangsmaterial (6) in festem Zustand umfasst.

7. Batteriekühlsystem nach einem der vorstehenden Ansprüche, wobei die Kühlmittelkartusche (4) eine Kapazität zum Speichern von zumindest 4 kWh Wärmeenergie besitzt.

8. Elektrische Bergbaumaschine (1), umfassend:
zumindest eine Batterie (10) zum Betreiben der Bergbaumaschine (1) und
ein Batteriekühlsystem (100) nach Anspruch 1 zum Kühlen der zumindest eine Batterie (10).

9. Verfahren zum Kühlen einer Batterie einer elektrischen Bergbaumaschine, umfassend:
Kühlen einer Kühlmittelkartusche (4),
Anordnen der gekühlten Kühlmittelkartusche (4) in einem Kühlmittelkartuschenempfänger (3),
Übertragen von durch die Funktion der Batterie (10) erzeugter Wärmeenergie auf die Kühlmittelkartusche (4) über den Kühlmittelkartuschenempfänger (3),
wodurch die Wärmeenergie in der Kühlmittelkartusche (4) durch Zusetzen der darin enthaltenen Wärmeenergie gespeichert wird, und
Entfernen der Kühlmittelkartusche (4) und der darin gespeicherten Wärmeenergie aus dem Kühlmittelkartuschenempfänger (3).

10. Verfahren zum Kühlen einer Batterie nach Anspruch 9, weiterhin umfassend:
Speichern von Wärmeenergie zumindest teilweise durch ein Phasenübergangsphänomen eines in der Kühlmittelkartusche (4) angeordneten Empfangsmaterials.

11. Verfahren zum Kühlen einer Batterie nach Anspruch 9 oder 10, weiterhin umfassend:
Anordnen der aus dem Kühlmittelkartuschenempfänger (3) entnommenen Kühlmittelkartusche (4) in einer Gefrieranordnung (200) zum Kühlen der Kühlmittelkartusche (4).

12. Verfahren zum Kühlen einer Batterie nach Anspruch 11, weiterhin umfassend:
Reduzieren des Wärmeenergiegehalts der Kühlmittelkartusche (3) durch ein Phasenübergangsphänomen eines in der Kühlmittelkartusche (4) angeordneten Empfangsmaterials.

## Revendications

1. Système de refroidissement de batterie (100) d'une machine d'exploitation minière électrique, comprenant :
des conduites de fluide (2) agencées pour communiquer avec une batterie (10) à refroidir pour transférer de l'énergie thermique de ladite batterie (10) à un fluide réfrigérant à l'intérieur desdites conduites de fluide (2),
un réceptacle de cartouche de fluide réfrigérant (3),
une cartouche de fluide réfrigérant (4) ayant une capacité pour recevoir et stocker de la chaleur,
dans lequel lesdites conduites de fluide (2) sont reliées audit récepteur de cartouche de fluide réfrigérant(3) pour transférer de l'énergie thermique du fluide réfrigérant à l'intérieur des conduites de fluide (2) à la cartouche fluide réfrigérant (4) disposé dans le réceptacle de cartouche de fluide réfrigérant (3),
**caractérisé en ce que** la cartouche de fluide réfrigérant (4) est disposée de manière amovible dans ledit réceptacle de cartouche de fluide réfrigérant (3).

2. Système de refroidissement de batterie selon la revendication 1, dans lequel la cartouche de fluide réfrigérant (4) comprend une chambre (5) agencée pour contenir une matière réceptrice (6) pour recevoir l'énergie thermique du fluide réfrigérant à l'intérieur des conduites de fluide (2).

3. Système de refroidissement de batterie selon la revendication 2, dans lequel la capacité de la cartouche de réfrigérant (4) à recevoir l'énergie thermique est au moins en partie basée sur la transition de phase de ladite matière réceptrice (6).

4. Système de refroidissement de batterie selon l'une quelconque des revendications précédentes, dans lequel la matière réceptrice (6) comprend de l'eau.

5. Système de refroidissement de batterie selon l'une quelconque des revendications précédentes, dans lequel la matière réceptrice (6) comprend du sel.

6. Système de refroidissement de batterie selon la revendication 1 ou 2, dans lequel la cartouche de fluide réfrigérant (4) comprend une matière réceptrice (6) à l'état solide.

7. Système de refroidissement de batterie selon l'une quelconque des revendications précédentes, dans lequel la cartouche de fluide réfrigérant (4) a une capacité de stockage d'au moins 4 kWh d'énergie thermique.

8. Machine d'exploitation minière électrique (1) comprenant :
au moins une batterie (10) pour faire fonctionner la machine d'exploitation minière (1) ; et
un système de refroidissement de batterie (100) selon la revendication 1 pour refroidir ladite au moins une batterie (10).

9. Procédé de refroidissement d'une batterie d'une machine d'exploitation minière électrique comprenant :
refroidir une cartouche de fluide réfrigérant (4),
disposer la cartouche de fluide réfrigérant refroidie (4) dans un réceptacle de cartouche de fluide réfrigérant (3),
transférer l'énergie thermique créée par le fonctionnement de la batterie (10) à la cartouche de fluide réfrigérant (4) au-dessus dudit réceptacle de cartouche de fluide réfrigérant (3),
stocker ainsi ladite énergie thermique dans la cartouche de fluide réfrigérant (4) en ajoutant de l'énergie thermique qu'il contient ; et
retirer la cartouche de fluide réfrigérant (4) et l'énergie thermique stockée qu'il contient du réceptacle de cartouche de fluide réfrigérant (3).

10. Procédé de refroidissement d'une batterie selon la revendication 9, comprenant en outre :
le stockage de l'énergie thermique au moins en partie par un phénomène de transition de phase d'une matière réceptrice disposée dans la cartouche de fluide réfrigérant (4).

11. Procédé de refroidissement d'une batterie selon la revendication 9 ou 10, comprenant en outre :
l'agencement de la cartouche de fluide réfrigérant (4) retirée du réceptacle de cartouche de fluide réfrigérant (3) dans un agencement de réfrigération (200) pour refroidir la cartouche de fluide réfrigérant (4).

12. Procédé de refroidissement d'une batterie selon la revendication 11, comprenant en outre :
la réduction de la teneur en énergie thermique de la cartouche de fluide réfrigérant (4) par un phénomène de transition de phase d'une matière réceptrice disposée dans la cartouche de fluide réfrigérant.
